# EUROPEAN PATENT APPLICATION

(11) **EP 4 659 983 A1**
(43) Date of publication of application: **10.12.2025**
(21) Application number: 24180868.2
(22) Date of filing: 07.06.2024
(51) Int. Cl.: B60K 35/23

(54) **METHOD AND APPARATUS FOR CORRECTING GHOSTING AND IMAGE ROTATION IN HEADS-UP DISPLAY UNIT**

(71) Applicant: Harman Becker Automotive Systems GmbH, 76307 Karlsbad (DE)
(72) Inventor: ÖLGÜN, Ramazan Ferhat, 80935 Munich (DE); TRACZYK, Maciej, 05-180 Pomiechówek (PL)
(74) Representative: Rummler, Felix

(57) **Abstract**

A heads-up display unit and a method of adjusting a projected image with the heads-up display unit comprising projecting, by a projector, an image comprising an image ray toward a combiner. The method further comprising splitting, by a splitting element, the image ray before the image ray hits the combiner. The method further comprising reflecting, by a freeform mirror, the image ray or the split image rays before the image hits the combiner. The method further comprising projecting the split and reflected image rays onto the combiner.

## Description

The present invention relates to a method of correcting ghosting and image rotation in a heads-up display system, and a heads-up display unit and a heads-up display unit operable to carry out the method.

### BACKGROUND OF THE INVENTION

A heads-up display (HUD) also known as a head-up guidance system (HGS), is any transparent display that presents data without requiring users to look away from their usual viewpoints. A HUD also has the advantage that the pilot's eyes do not need to refocus to view the outside after looking at the optically nearer instruments. Although they were initially developed for military aviation, HUDs are now used in commercial aircraft, automobiles, and other (mostly professional) applications.

A typical HUD contains three primary components: a projector unit, a combiner, and a video generation computer. The projection unit in a typical HUD is an optical collimator setup: a convex lens or a mirror with a cathode-ray tube, light emitting diode (LED) display, or liquid crystal display (LCD) display at its focus. This setup produces an image where the light is collimated, i.e. the focal point is perceived to be at infinity. The combiner is typically an angled flat piece of glass (also known as a beam splitter) located directly in front of the viewer, that redirects the projected image from the projector in such a way as to see the field of view and the projected infinity image at the same time. Combiners may have special coatings that reflect the monochromatic light projected onto it from the projector unit while allowing all other wavelengths of light to pass through. In some optical layouts combiners may also have a curved surface to refocus the image from the projector. The computer provides the interface between the HUD (i.e. the projection unit) and the systems/data to be displayed and generates the imagery and symbology to be displayed by the projection unit.

With the advancement of HUD technology, HUD systems are becoming smaller and more sophisticated. A HUD unit may have typically been placed perpendicular to the combiner/windshield (or in the line-of sight of the user) such that it projects an image on to the center of the combiner/windshield. However, the reduced size of HUD units and other requirements (for example, busy real-estate of other components in a vehicle) mean that a HUD unit may be placed off center from the combiner/windshield. This off center placement can lead to the projected image appearing rotated to the user. To reduce this effect, a HUD unit may be physically rotated reduce the rotation effect. However, such a rotation leads to complexities in the alignment of other projection features For example, such rotation can lead to lower resolution, differences in brightness (such as light/dark spots or a whole image that is brighter/darker than intended) and a reduction in contrast of the projected image. This requires further components to be built into the HUD unit (and the system as a whole) and further adjustments to be made to compensate for the reduction in the rotation effect. The addition of these components increases the cost and complexity of the HUD unit.

A further challenge with HUD systems is projecting a well-focused image on the windshield. When the image is reflected through multiple layers of glass (or multiple surfaces of glass) at an angle, visual distortion (commonly known as ghosting) can occur. To reduce the effects of ghosting, the combiner (for example, the windshield of a vehicle) can be manufactured to have a wedged shape. However, this solution requires a HUD unit to be paired with a specific windshield which puts a large burden on resources and cost to the original equipment manufacturer (OEM) to manufacture a specific windshield and a specific HUD unit.

It is an aim of this invention to address the above issues.

### SUMMARY

To achieve the above objectives, the invention sets out a method and a multi-band multistandard re-configurable media receiver as set out in the claims below.

In a preferred embodiment a heads-up display unit is provided, the heads-up display unit includes a housing, a projector within the housing, a splitting element within the housing, and a freeform mirror within the housing. By providing a single unit that houses a projector, a splitting element and also a freeform mirror, a heads-up display unit is provided in a single package that can correct for optical issues such as ghosting effects and image rotation (for example, due to non-linear placement of the heads-up display unit. A single unit provides a more precise arrangement because all of the components can be put together (for example, by the manufacturer) to a high specification and calibration which avoids misalignment and calibration issues when the heads-up display unit is installed into a vehicle (for example by a vehicle manufacturer or by a user). Further advantages include the versatility of providing a simple "all-in-one" heads-up display unit that can be used for multiple applications (for example, multiple different types of vehicles) and can correct for ghosting effects and image rotation without the need to acquire additional components for each separate vehicle.

In an embodiment the the projector may be operable to project an image onto a combiner, the image comprising an image ray. Advantageously, the heads-up display unit can provide a user with a heads-up display image in which no ghosting and/or image rotation is observed.

In an embodiment, the combiner may be a windshield of a vehicle, a beam splitter, a diffraction grating, a thin film volume hologram, or a glass splitting wedge. Advantageously, the heads-up display unit may be used to project heads-up display images in vehicles and/or other appliances (such as in helmets or any other type of arrangement where a heads-up display may be desired).

In an embodiment, the projector may include a light emitting diode (LED) projector (which may be an organic LED (OLED) type projector), a liquid crystal display (LCD) projector; a laser projector; or any combination of the above. Thus, ghosting and/or image rotation effects can be reduced in heads-up display arrangements comprising any type of projection.

In an embodiment, the splitting element and the freeform mirror may be placed in front of the projector, wherein the image ray projected by the projector may pass through the splitting element and the freeform mirror before the image ray is projected onto the combiner. Advantageously, any ghosting and/or image rotation effect that would have been observed by the user (if the splitting element and/or freeform mirror had not been present) are corrected in the heads-up display unit (before the image ray exits the heads-up display). This is advantageous because these optical adjustments are made using one compact device which reduces the need for additional components, improves the alignment (because fewer components need to be aligned by the manufacturer and/or end user) and also reduces the cost to the manufacturer and the end-user.

In an embodiment, the splitting element may include a beam splitter operable to split the projected image ray into at least two image rays, wherein: a first ray of the at least two image rays is transmitted through the beam splitter; a second ray of the at least two image rays is reflected by the beam splitter such that the second ray is projected separate from and parallel to the first ray; the distance between the first ray and the second ray is set to a predetermined threshold based on the physical properties of the combiner; and the combiner is operable to reflect the first ray at a first angle and to reflect the second ray at a second angle such that the first ray and the second ray are combined at predetermined distance from the combiner. Ghosting occurs, a when the projected image ray is reflected through multiple layers of glass at an angle. By splitting the projected image ray into two (or more) rays that run in parallel to each other, this ghosting effect can be cancelled. This can be achieved when splitting element has the same splitting characteristics of the combiner (for example, the windshield of the vehicle). This is because the rays split by the splitting element will hit the combiner (the windshield of the vehicle) and will then each be reflected by the combiner. The reflection by the combiner will cause the two split rays to converge to a single projected image ray which will be observed by a user. Therefore, the user will not experience two rays (ghosting) but will instead only experience one image ray, namely the projected image ray. This also removes the need of a special coating being placed on the combiner (the windshield of the vehicle) reflect and collimate the projected image toward the user.

In an embodiment the splitting element is not adjustable. Advantageously, the splitting element can be finely tuned by the manufacturer to split an image ray according to the specifications of the combiner for which the heads-up display unit is destined (for example, a specific model of windshield for a specific vehicle type). This provides an improved reduction of the ghosting effect without the need of adjustment from the vehicle manufacturer or end user.

In an embodiment the splitting element may be orthogonal to the projected image ray or at an angle less than 180° to the projected image ray. The freeform mirror may be orthogonal to the at least two image rays or at an angle less than 180° to the at least two image rays. Advantageously, the heads-up display unit may be placed at different locations in a vehicle and/or in a helmet while still being able to reduce ghosting and/or image rotation effects. For example, the heads-up display unit may be placed on a dashboard of a vehicle, on a headrest of a seat within a vehicle, or hanging from the headliner of a vehicle.

In an embodiment the freeform mirror may include a flat reflective surface, a concave reflective surface, a convex reflective surface, or a combination of the above. Advantageously, image rotation can be corrected for a plurality of different types of windshield and/or other types of combiner. Furthermore, image rotation can be corrected for a plurality of different location placements of the heads-up display unit.

In an embodiment the freeform mirror may be operable to be rotated around the x-axis, the y-axis, the z-axis, or any combination of the x-, y-, and z-axes. Advantageously, a vehicle manufacturer and/or end-user may adjust (either manually or using a user interface that is coupled to a motor) the freeform mirror such that image rotation can be corrected for a plurality of different types of windshield and/or other types of combiner. Furthermore, image rotation can be corrected for a plurality of different location placements of the heads-up display unit.

In a preferred embodiment a system is provided, the system includes a combiner and the heads-up display as described above.

In an embodiment the combiner may be a windshield of a vehicle, a screen of a helmet, a standalone reflective surface, or any combination of the above. Advantageously, the heads-up display unit can be used in a versatile manner and for any type of heads-up display arrangement.

In a preferred embodiment a method of adjusting a projected image with a heads-up display as described above is provided. The method includes projecting, by the projector, an image comprising an image ray toward a combiner. The method further includes splitting, by the splitting element, the image ray before the image ray hits the combiner. The method further includes reflecting, by the freeform mirror, the image ray or the split image rays before the image hits the combiner. The method further includes projecting the split and reflected image rays onto the combiner. Advantageously, image ghosting and image rotation can be reduced as described above.

In an embodiment the method may further include splitting the projected image ray into at least two image rays, wherein: a first ray of the at least two image rays is transmitted through the splitting element; a second ray of the at least two image rays is reflected by the splitting element such that the second ray is projected separate from and parallel to the first ray; the distance between the first ray and the second ray is set to a predetermined threshold based on the physical properties of the combiner; and the combiner is operable to reflect the first ray at a first angle and to reflect the second ray at a second angle such that the first ray and the second ray are combined at predetermined distance from the combiner. Advantageously, a user may experience less or no image ghosting, as described above.

In an embodiment the method may further include rotating the freeform mirror in at least one of the x-axis, the y-axis, and the z-axis. Advantageously, a vehicle manufacturer and/or end-user may adjust (either manually or using a user interface that is coupled to a motor) the freeform mirror such that image rotation can be corrected for a plurality of different types of windshield and/or other types of combiner. Furthermore, image rotation can be corrected for a plurality of different location placements of the heads-up display unit.

### BRIEF DESCRIPTION OF THE DRAWINGS

The features, objects, and advantages of the present disclosure will become more apparent from the detailed description set forth below when taken in conjunction with the drawings in which like reference numerals refer to similar elements.
Figure 1 shows an example of ghosting and image rotation in a heads-up display system;
Figure 2 depicts a block diagram of a heads-up display system according to the invention;
Figure 3 shows a side-view diagram of a heads-up display system without correction elements;
Figure 4 shows an alternative side-view diagram of a heads-up display system without correction elements;
Figure 5 shows a front-view diagram of a heads-up display system without correction;
Figure 6 shows a side-view diagram of a windshield depicting splitting of rays of an image on the surfaces of the windshield;
Figure 7 depicts measurements of rotation of image rays of an image projected onto a windshield without correction where the heads-up display unit is placed central to the windshield;
Figure 8 depicts measurements of splitting of rays of an image on the surfaces of the windshield without correction;
Figure 9 shows an alternative front-view diagram of a heads-up display system without correction where the heads-up display unit is placed off center of the windshield;
Figure 10 depicts measurements of rotation of image rays of an image projected onto a windshield without correction where the heads-up display unit is placed off center to the windshield;
Figure 11 depicts measurements of splitting of rays of an image on the surfaces of the windshield without correction where the heads-up display unit is placed off center to the windshield;
Figure 12 depicts a heads-up display system and the optical path of the rays of an image;
Figure 13 depicts a blown-up diagram of the heads-up display system of Figure 12;
Figure 14 depicts measurements of splitting of rays of an image on the surfaces of the windshield with correction elements in the heads-up display unit;
Figure 15 depicts measurements of rotation of image rays of an image projected onto a windshield with correction elements in the heads-up display unit; and
Figure 16 depicts a flow chart of a method according to the invention.

### DETAILED DESCRIPTION

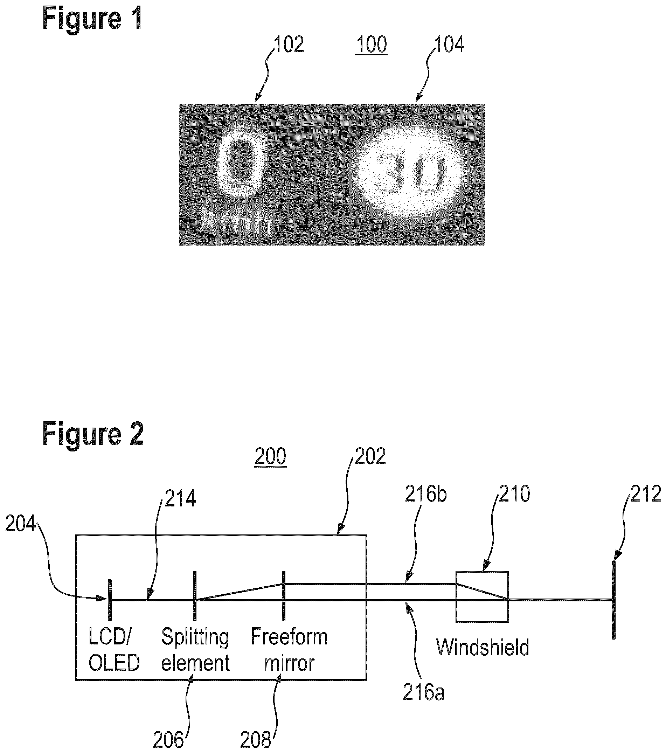

Figure 1 shows an example of an image projected by a heads-up display (HUD) unit onto a windshield 100 of a vehicle. The example image shows two projections. The first projection 102 depicts the speed of the vehicle (herein shown as 0 km/h). The second projection 104 depicts a local speed limit (herein shown as 30 km/h).

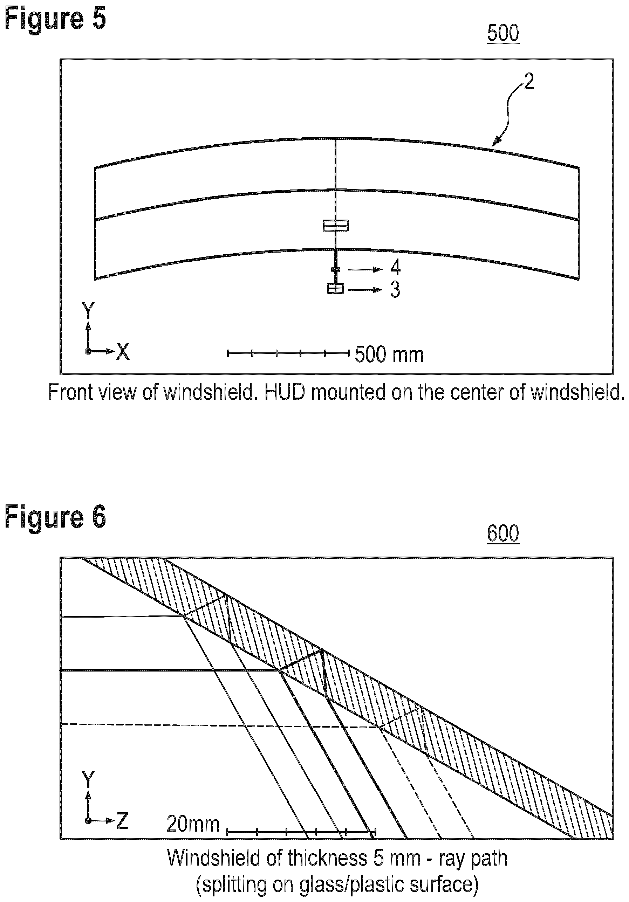

Ghosting is observed in both 102 and 104. Ghosting can be defined as a visual distortion of an image that occurs when the image is reflected through multiple layers of glass at an angle. In particular, ghosting refers to the effect of an image artifact appearing as a trail behind the intended image, similar to a motion blur. This is referred to as ghosting because it creates a trace of the image that looks like a ghost of the image. The effects of image ghosting due to the reflection of an image through multiple layers of glass is shown in both projections 102 and 104. For example, ghosting is viewed in projection 102 in that two images are viewable, one in front of the other. Ghosting is also viewed in projection 104 in that the image appears out of focus. This is, in fact, the same effect as with projection 102 but is sometimes viewed as `out of focus. The effects of ghosting with relation to image rays of the image are shown and described in more detail with reference to Figures 6, 8, and 11 to 14.

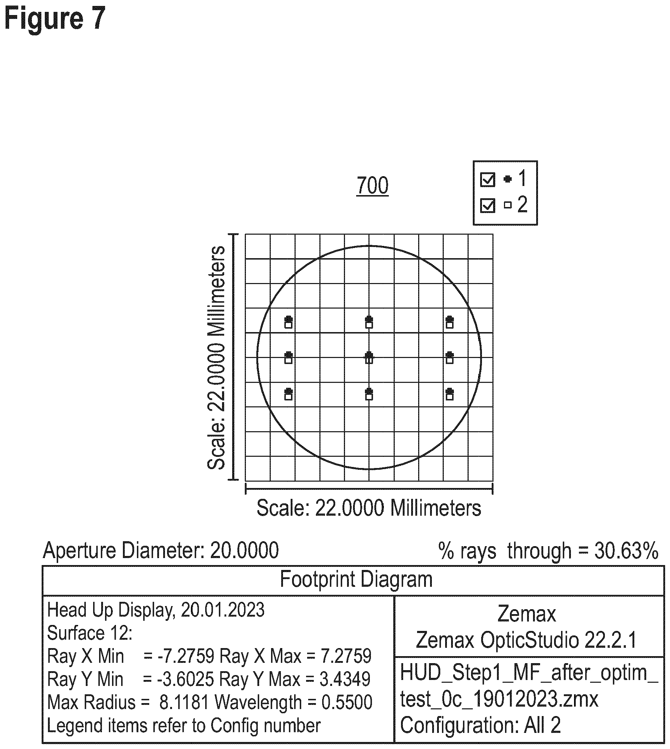

Image rotation is also observed in both 102 and 104. In particular, Figure 1 shows that the numbers '0' and `30' of projections 102 and 104, respectively, are not in parallel with the top and the bottom of the screen. This is often observed when a heads-up display (HUD) projector is placed off-center from a combiner and when the combiner (for example, a windshield of a vehicle) is in a curved shaped (for example, a toroidal windshield). The rotation occurs due to the combination of the off-set projection and the curvature of the combiner. This is because part of the image (for example, the left side of the image) has a different distance to reach the combiner than another part of the image (for example, the right side of the image). In a HUD system of a vehicle, where a HUD projector is frequently placed off-center (for example, due to space constraints) image rotation is observed by the driver which can be distracting. The effects of image rotation with relation to image rays of the image are shown and described in more detail with reference to Figures 7, 9, 10, 12, 13 and 15.

These two projections merely serve as examples to demonstrate the effects of ghosting and rotation exhibited by HUD units. The invention is my no means limited to two projections, nor is it limited to the two specific projections 102 and 104 as depicted in Figure1.

Figure 2 depicts a block diagram of a heads-up display (HUD) system 200 which address the problems of ghosting and image rotation in a simple, compact and easily adaptable arrangement. HUD system 200 comprises a HUD unit 202 (the HUD unit 202 also referred to as a HUD, a heads-up-display unit, a heads-up display projector, and a HUD projector) which is an all-in-one unit and a combiner 210. The HUD unit 202 is a projector unit that comprises a housing, a projector 202 within the housing, an optical splitting element 206 within the housing, and a freeform mirror 208 within the housing. By providing a single unit that houses a projector, a splitting element and also a freeform mirror, a heads-up display unit is provided in a single package that can correct for optical issues such as ghosting effects and image rotation (for example, due to non-linear placement of the heads-up display unit. A single unit provides a more precise arrangement because all of the components can be put together (for example, by the manufacturer) to a high specification and calibration which avoids misalignment and calibration issues when the heads-up display unit is installed into a vehicle (for example by a vehicle manufacturer or by a user). Further advantages include the versatility of providing a simple "all-in-one" heads-up display unit that can be used for multiple applications (for example, multiple different types of vehicles) and can correct for ghosting effects and image rotation without the need to acquire additional components for each separate vehicle.

In current HUD projectors mounted in vehicles where the windshield of the vehicle is used as part of the optical path a ghosting effect is observed, as shown in Figure 1. Moreover if the HUD is mounted off the center of the windshield rotation of image on driver's eye box is observed. Current implementations use a wedged shaped windshield to reduce ghosting effect. This solution is very expensive and places a large engineering burden on the manufacturer which leads to unnecessary cost. By adding optical splitting element 206 (for example, a wedge grating or a cube beam splitter) to split the rays emitted from the heads-up display unit 202, correction and collimation on the reflected image are done on the surface of the combiner 210 (for example the windshield of the vehicle). This solution does not require any additional coating (for example, anti-reflective coating) on the combiner/windshield which could negatively affects the driver's forward field of vision (UN R 125). Moreover, no expensive wedge windshield is needed.

The HUD unit 202 is operable to project an image 214 (for example, an image ray from the projector 204) toward the combiner 210. Advantageously, the heads-up display unit can provide a user with a heads-up display image in which no ghosting and/or image rotation is observed. The combiner 210 is a beam splitter which may be a windshield of a vehicle or of a helmet. The combiner may be in a curved shape, such as a toroidal windshield of a vehicle or any other curved shape. The combiner 210 is operable to reflect the image 214 (or, as is described in more detail below, split rays 216a and 216b of the image) towards a focal point 212 where a user (for example, a driver of a vehicle or a wearer of a helmet) may view the image 214. The combiner may be a windshield of a vehicle, a beam splitter, a diffraction grating, a thin film volume hologram, or a glass splitting wedge,. Advantageously, the heads-up display unit may be used to project heads-up display images in vehicles and/or other appliances (such as in helmets or any other type of arrangement where a heads-up display may be desired).

The combiner may include the windshield of a vehicle, a screen of a helmet, a standalone reflective surface, or any combination of the above. The windshield may have a toroidal shape and a finite thickness (for example, 3mm, 4mm, 5mm, 6mm, 7mm or any other suitable thickness for a windshield of a vehicle). The windshield may be made of glass, plastic or any other type of suitable material for a windshield. Advantageously, the heads-up display unit can be used in a versatile manner and for any type of heads-up display arrangement.

The projector 204 may be any suitable projector for projecting a ray representing an image to be projected. For example, the projector 204 may be a light-emitting diode (LED) type projector, an organic LED (OLED) type projector, a liquid crystal display (LCD) type projector, a laser projector, or any combination of the above. Thus, ghosting and/or image rotation effects can be reduced in heads-up display arrangements comprising any type of projection.

The splitting element 206 may be an optical device that splits a beam of light into a transmitted 216a and a reflected beam 216b. The splitting element 206 may be a wedge grating, a cube beam splitter or any other suitable beam splitter. For example, the splitting element 206 may be a cube made from two or more triangular prisms (for example, made of glass) which are attached (for example, glued) together at their base using polyester, epoxy, urethane-based adhesives, or any other suitable adhesive. The splitting element 206 may alternatively or additionally comprise an optical substrate (for example, a sheet of glass or plastic) with a partially transparent thin coating of metal or a thin dichroic optical coating. The thickness of the coating may be controlled so that part (for example, half) of the light, which is incident at an angle (for example, a 45-degree angle) and not absorbed by the coating or substrate material, is transmitted and the remainder is reflected.

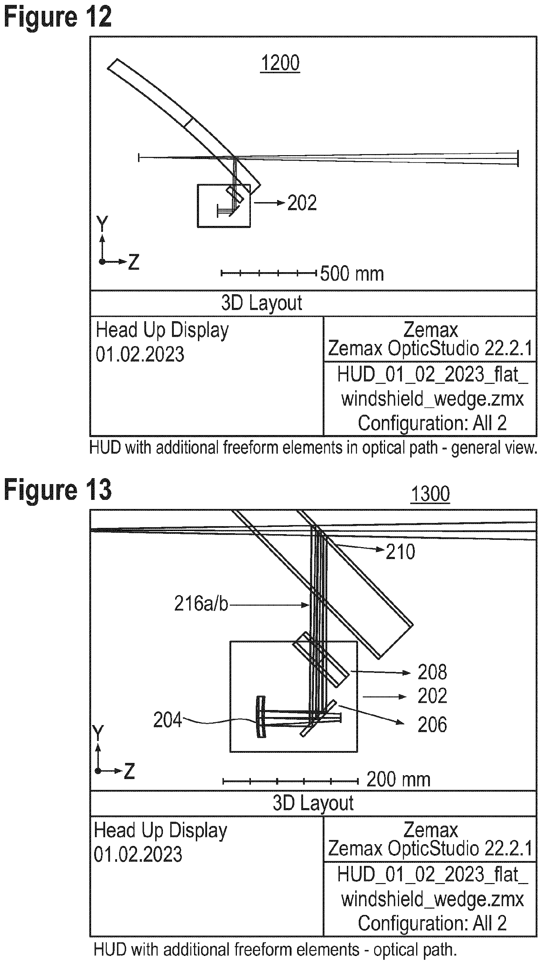

The splitting element 206 may include a beam splitter operable to split the projected image ray 214 into at least two image rays 216a and 216b. A first ray 216a of the at least two image rays is transmitted through the beam splitter 206 and a second ray 216b of the at least two image rays is reflected by the beam splitter such that the second ray 216b is projected separate from and parallel to the first ray 216a. The distance between the first ray 216a and the second ray 216b is set to a predetermined threshold. The predetermined threshold is based on the physical properties of the combiner 210 (for example, the combiner's angle of curvature (if any), the combiner's thickness, the material of the combiner and any optional coatings that may be present on the combiner). The distance is set such that when the first ray 216a and the second ray 216b are reflected from the combiner the reflected first and second rays are collimated toward the user, as shown in Figures 12 and 13. Accordingly, the combiner 210 is operable to reflect the first ray 216a at a first angle and to reflect the second ray 216b at a second angle such that the first ray and the second ray are combined and collimated at predetermined distance from the combiner.

Ghosting occurs, a when the projected image ray is reflected through multiple layers of glass at an angle. By splitting the projected image ray into two (or more) rays that run in parallel to each other, this ghosting effect can be cancelled. This can be achieved when splitting element has the same splitting characteristics of the combiner (for example, the windshield of the vehicle). This is because the rays split by the splitting element will hit the combiner (the windshield of the vehicle) and will then each be reflected by the combiner. The reflection by the combiner will cause the two split rays to converge to a single projected image ray which will be observed by a user. Therefore, the user will not experience two rays (ghosting) but will instead only experience one image ray, namely the projected image ray. This also removes the need of a special coating being placed on the combiner (the windshield of the vehicle) reflect and collimate the projected image toward the user.

With the heads-up display unit 202, there is no need to apply a special coating (for example, anti-reflective coating) on the combiner to reflect and collimate the projected image toward the user. This is because the rays split by the splitting element 206 will be reflected by the combiner in a way that collimates the rays toward a user.

The features of the splitting element 206 and also the placement of the splitting element 206 within the heads-up display unit 202 may be fixed and not adjustable. Advantageously, the splitting element can be finely tuned by the manufacturer to split an image ray according to the specifications of the combiner for which the heads-up display unit is destined (for example, a specific model of windshield for a specific vehicle type). This provides an improved reduction of the ghosting effect without the need of adjustment from the vehicle manufacturer or end user. Furthermore, better optical performance can be achieved without any moving parts (optical or mechanical).

The splitting element 206 may be orthogonal to the projected image ray or at an angle less than 180° to the projected image ray (for example, at 45° to the projected image ray). The freeform mirror 208 may be orthogonal to the at least two image rays 216a, 216b or at an angle less than 180° to the at least two image rays (for example, at 45° to the projected image ray), as shown in Figures 12 and 13. Advantageously, the heads-up display unit may be placed at different locations in a vehicle and/or in a helmet while still being able to reduce ghosting and/or image rotation effects. For example, the heads-up display unit may be placed on a dashboard of a vehicle, on a headrest of a seat within a vehicle, or hanging from the headliner of a vehicle.

The freeform mirror 208 may include a flat reflective surface, a concave reflective surface, a convex reflective surface, or a combination of the above. Advantageously, image rotation can be corrected for a plurality of different types of windshield and/or other types of combiner. Furthermore, image rotation can be corrected for a plurality of different location placements of the heads-up display unit. Accordingly, the optical path of the image ray 214 and/or the at least two image rays 216a, 216b will include freeform optical elements (i.e. freeform mirror 208) dedicated for the correction of a windshield curvature. Due to this curvature, images without correction elements are rotated.

The freeform mirror 208 may include additional components, such as additional mirrors and/or lenses to optimise the optical path of the image ray 214 and/or the two image rays 216a, 216b. For example, an additional set of mirrors and/or lenses may be included in a freeform mirror assembly (not shown) in an arrangement where the image has to be projected onto a combiner 210 at an angle less than 45°.

In an embodiment the freeform mirror 208 may be operable to be rotated around the x-axis, the y-axis, the z-axis, or any combination of the x-, y-, and z-axes. The angle of rotation of the image ray 214 and/or the at least two rays 216a, 216b may be adjusted depending on the specific location of the heads-up display unit 202 (and, more specifically, how off-center the heads-up display unit 202 is placed relative to the center of the combiner 210). Advantageously, a vehicle manufacturer and/or end-user may adjust (either manually or using a user interface that is coupled to a motor) the freeform mirror such that image rotation can be corrected for a plurality of different types of windshield and/or other types of combiner. Furthermore, image rotation can be corrected for a plurality of different location placements of the heads-up display unit.

The splitting element 206 and the freeform mirror 208 may be placed in front of the projector 204. Accordingly, the image ray 214 projected by the projector 204 passes through the splitting element 206 and/or the freeform mirror 208 before the image ray 214 is projected onto the combiner 210. Advantageously, any ghosting and/or image rotation effect that would have been observed by the user (if the splitting element and/or freeform mirror had not been present) are corrected in the heads-up display unit (before the image ray exits the heads-up display). This is advantageous because these optical adjustments are made using one compact device which reduces the need for additional components, improves the alignment (because fewer components needs to be aligned by the manufacturer and/or end user) and also reduces the cost to the manufacturer and the end-user.

The outside of the housing comprises one or more mounting points suitable for mounting the HUD unit 202 to a surface. The mounting points may comprise one or more fixtures known to the skilled person (for example, but not limited to, a collection of fixing holes for screws and/or nails, one or more hooks for hanging the HUD unit 202 from a surface, a Velcro or other type of fastening surface). The HUD unit 202 may be for a vehicle in which case the mounting points may be suitable for mounting the HUD unit 202 to the dashboard of the vehicle, on a seat of the vehicle, suspended from the roof-liner of the vehicle, or any other suitable mounting method. A vehicle in this scenario comprises any vehicle where a heads-up display may be of use which includes, but is not limited to, a land-vehicle (such as a motorcycle, automobile, heavy goods vehicle or any other single or multi-wheeled vehicle), any type of aircraft (including helicopters), and any type of water vehicle (for example, a boat, a ship, a sub-marine, etc.). The HUD unit 202 may also be for a helmet (such as for a motorcycle and/or a bicycle helmet). The HUD unit 202 may also be implemented in Augmented Reality (AR) and Virtual Reality (VR) applications including in the application of an AR/VR headset.

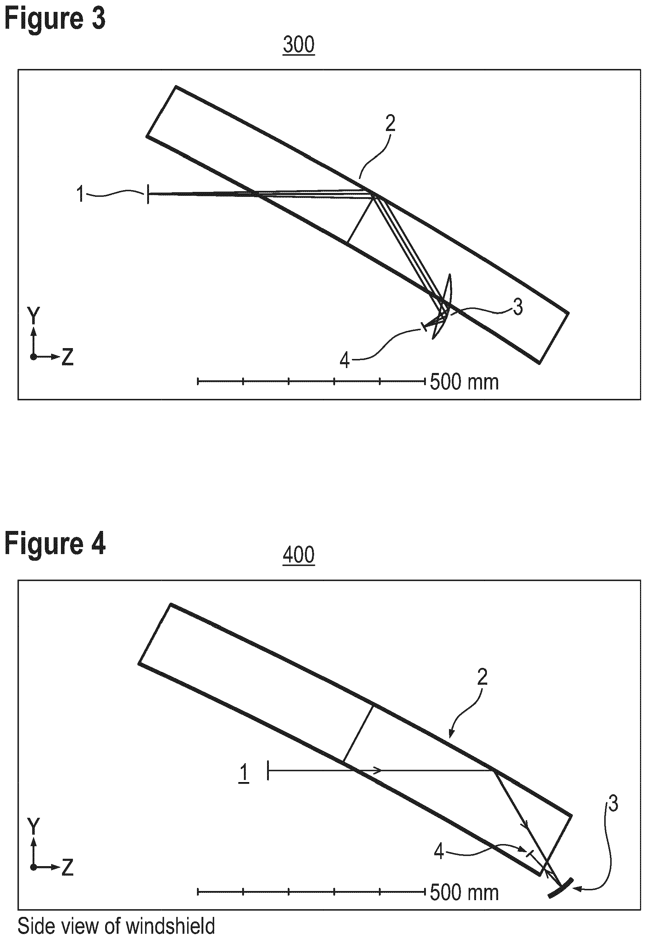

Figures 3 to 8 provide examples useful for understanding the problems of ghosting and image rotation as exhibited in Figure 1. Figure 3 and Figure 4 show side-view diagrams of two different heads-up display systems without correction elements. In the system 300 of Figure 3 and the system 400 of Figure 4, a projector 4 projects an image ray onto a mirror 3 which may be present depending on the angle at which the projector 4 is placed relative to a combiner 2. The projector 4 may be placed at different locations (as shown in Figures 3 and 4). The combiner 2 (for example, a windshield of a vehicle) may be wedge-shaped and/or comprise an anti-reflective coating (not shown) to collimate the projected image rays to a focal point 1 at which a user would view the projected image. Figure 5 shows a front-view diagram of a heads-up display system 500 without correction which, substantially, corresponds to systems 300 and 400 described above.

Figure 6 shows a side-view diagram of a windshield 600 depicting splitting of rays of an image on the surfaces of the windshield. Without the wedge shape and/or the anti-reflective coating, the user would experience ghosting. This is due to the windshield comprising multiple surfaces of glass (i.e. a top surface and a bottom surface opposite the top surface). When the image is reflected by each of the surfaces at an angle, the image rays may be split into two rays (as shown in Figure 6). This creates the visual distortion described as ghosting in this application. The examples of Figs 3 to 6 would not observe any image rotation because the projector 4 is mounted central to the combiner/windshield 2 where there is substantially no curvature of the combiner/windshield 2 relative to the projector 4.

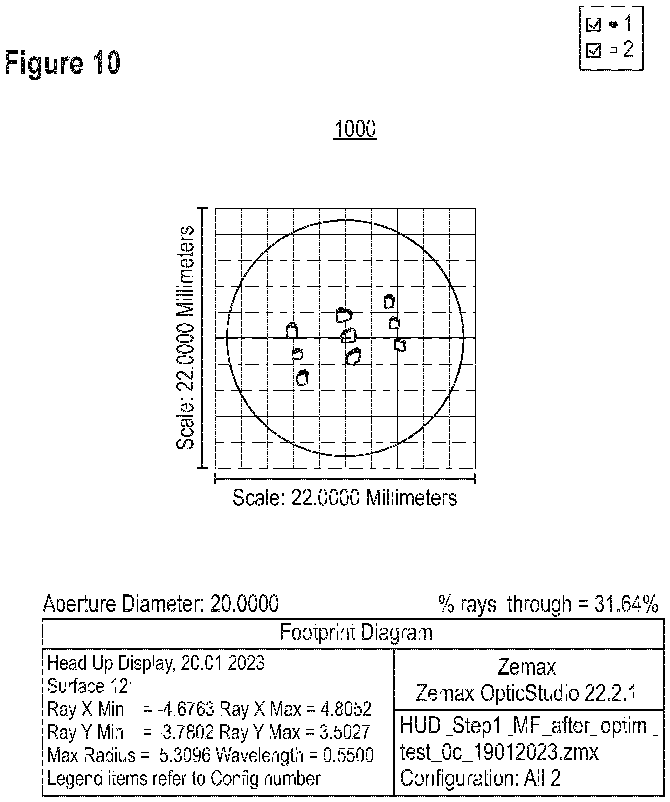

Figure 7 depicts measurements of rotation of image rays of an image projected onto a windshield and reflected from the windshield to a focal point (i.e. where a user might view the image) without correction. In Figure 7, the heads-up display unit is placed central to the windshield. The graph in Figure 7 depicts nine example image rays that have been projected from a typical heads-up display arrangement (for example, that described in Figures 3 to 6 above) at a point at which a user might view those image rays. Image rotation is not exhibited in Figure 7, as is expected because the projector 4 is mounted central to the combiner/windshield 2. A representation of image rotation can be seen in Figure 10 (as described below) where the nine example image rays are all rotated counter-clockwise.

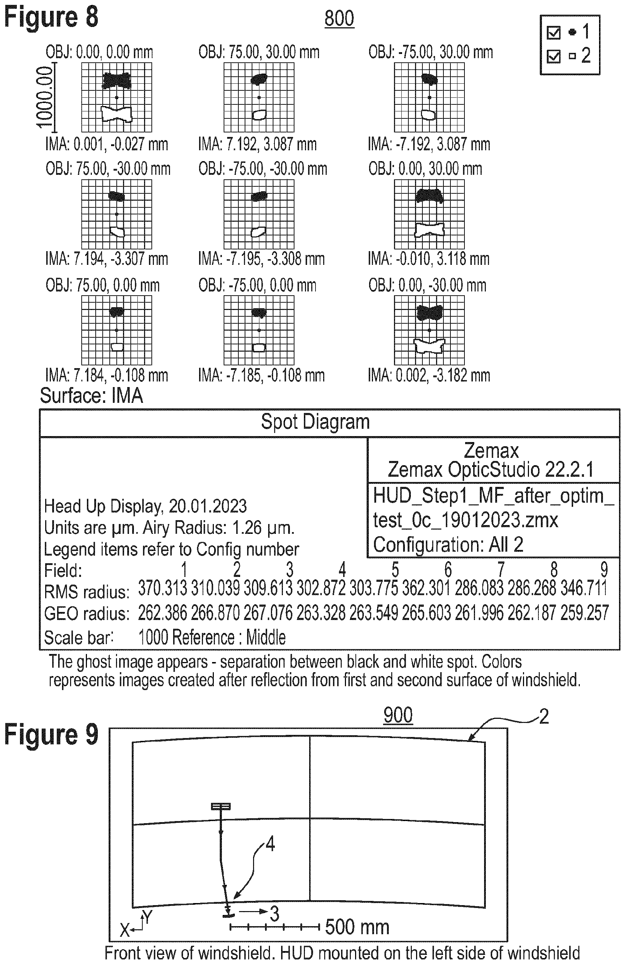

Some image ray splitting is observed in Figure 7 and, thus, some image ghosting is also observed in Figure 7. This is shown by one plus symbol (in black) and one square symbol (in white) for each of the nine image rays. The plus symbols each represent a first image ray that has been projected from a projector of a heads-up display projector and, subsequently, reflected from a collimator/windshield. The square symbols each represent a second image ray that has been projected from a projector of a heads-up display projector and, subsequently, reflected from a collimator/windshield. In an ideal scenario, the plus symbols and the square symbols would perfectly overlap. This would indicate no image ghosting at all. Any non-overlapping feature indicates a 'second' ghost image is being projected, due to the reflection in the combiner/windshield. This is further exemplified in Figure 8, which, as with Figure 7, displays both first and second image rays of each of the nine image rays. In Figure 8, the first image ray (of each of the nine image rays) is shown in black and the second image ray (of each of the nine image rays) is shown in white.

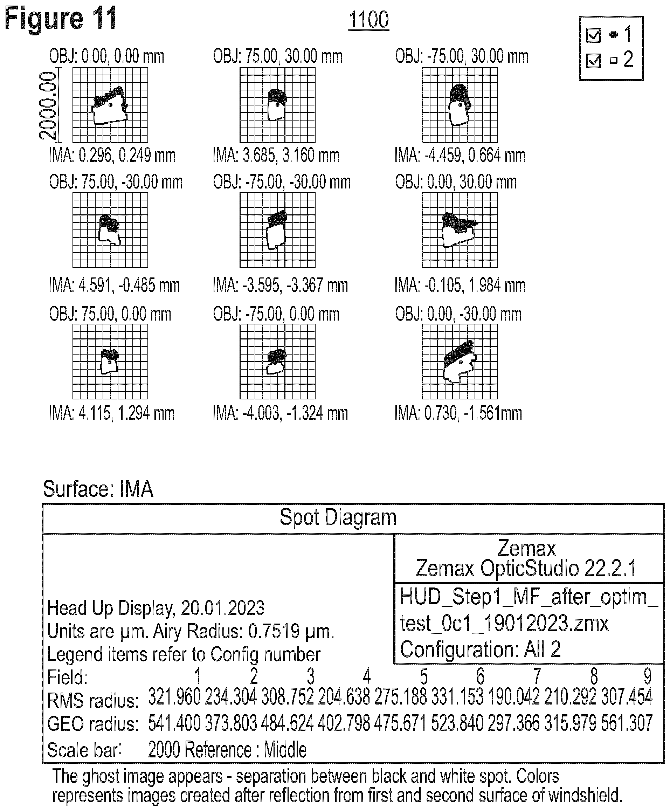

Figure 9 shows a front-view diagram of a heads-up display system 900 without correction where the heads-up display unit (comprising the projector 4 and the mirror 3) is placed off center of the windshield 2. The system 900 is substantially the same as that of Figures 3, 4 and 5 except that the heads-up display unit is placed off center of the windshield 2. Hence, the projected HUD image is not projected on the center of the windshield 2 which, in a toroidal or other curved shaped windshield of combiner, can cause image rotation. Figure 10 correlates to nine exemplary image rays projected and reflected from the heads-up display system 900 of Figure 9. As shown in Figure 10, each of the nine exemplary rays exhibit some image ghosting (as described above with reference to Figures 7 and 8), but also image rotation in that the nine exemplary rays are not orthogonal but are, instead, rotated clockwise (thus, presenting a rotated image). As described in detail above, correcting for this issue was previously done by rotating the entire HUD projector which can cause other optical hurdles to overcome (for example, an unclear image and/or more image ghosting). Image ghosting is also present with the system 900 of Figure 9 as is displayed in Figure 11 where the substantial separation between black and white spots represent a ghost image.

The issues of image ghosting described with reference to Figures 1 and 3 to 11 above are addressed by the system 200, the heads-up display unit 202 and, in particular, the optical splitting element 206 as described with reference to Figure 2 above. This is shown in more detail below with reference to Figures 12, 13 and 14. The issues of image rotation described with reference to Figures 1 and 3 to 11 above are addressed by the system 200, the heads-up display unit 202 and, in particular, the freeform mirror 208 as described with reference to Figure 2 above. This is shown in more detail below with reference to Figures 12, 13 and 15.

Figure 12 shows a heads-up display system 1200 and the optical path of the rays of an image. System 1200 corresponds to a general view of system 200 described above with reference to Figure 2, comprising heads-up display unit 202 which includes the splitting element 206 and the freeform mirror 208 as also described in Figure 2. Figure 13 shows a blown-up diagram 1300 of the heads-up display system 1200 of Figure 12. In particular, Figure 13 shows an exemplary path that projected image rays from the projector 204 may take toward the splitting element 206 (where each image ray is split as described above), then toward the freeform mirror 208 (where each split image ray is rotated), then toward the combiner/windshield 210 where the split image rays are again reflected and collimated toward a user.

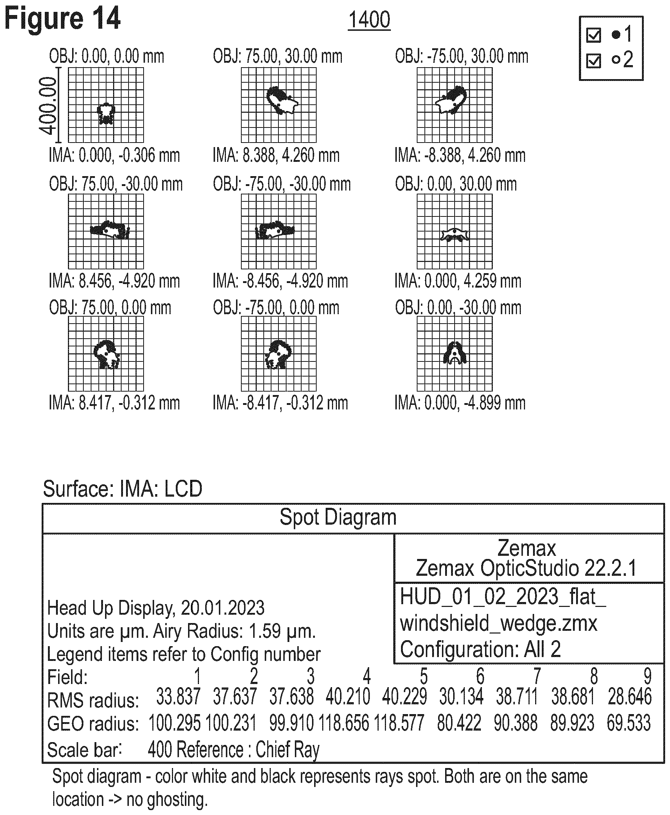

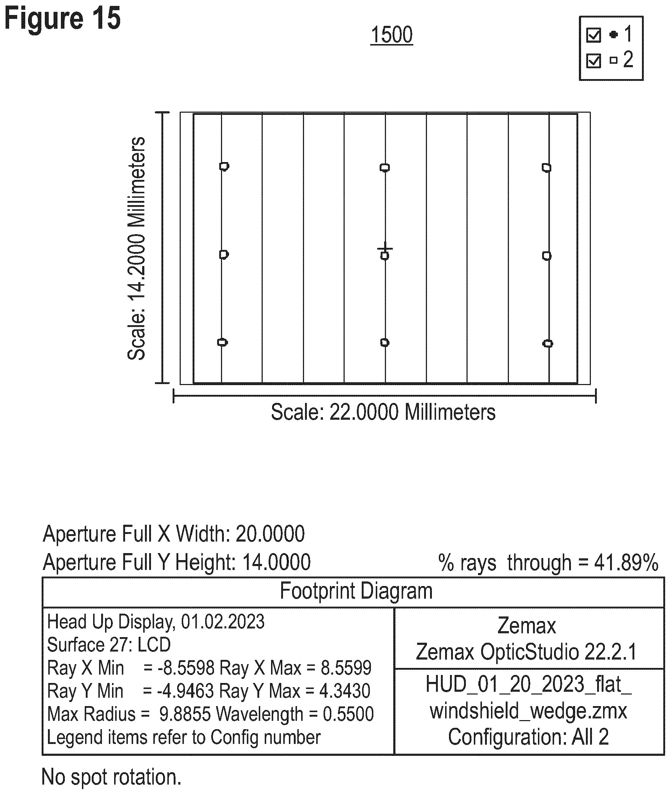

Figures 14 and 15 refer, respectively, to graphs 1400 and 1500 that represents the collimated image rays at the point at which a user would view the image ray. Graph 1400 demonstrates the large reduction in image ghosting and graph 1500 demonstrates the lack of image rotation when the heads-up display unit 202 is placed off-center to the combiner/windshield 210. In graph 1400, the first image ray (of each of nine exemplary image rays) is shown in black and the second image ray (of each of the nine exemplary image rays) is shown in white. It can be seen from graph 1400 that there is substantially more overlap between the black and white spots compared to the graphs of Figures 8 and 11. As described above, more overlap represents less image ghosting. Therefore, image ghosting is substantially reduced with the arrangement described above with reference to Figures 2, 12 and 13. In graph 1500, each of the nine exemplary image rays are orthogonal and are, relatively, straight as also depicted in Figure 7 where a heads-up display projector is placed central to the windshield/combiner 2. However, the results taken from graph 1500 are from a system 1200, 1300 where the heads-up display unit 202 is placed off-center to the combiner/windshield 210. Thus, it is shown that no image rotation is observed with the arrangement described above with reference to Figures 2, 12 and 13.

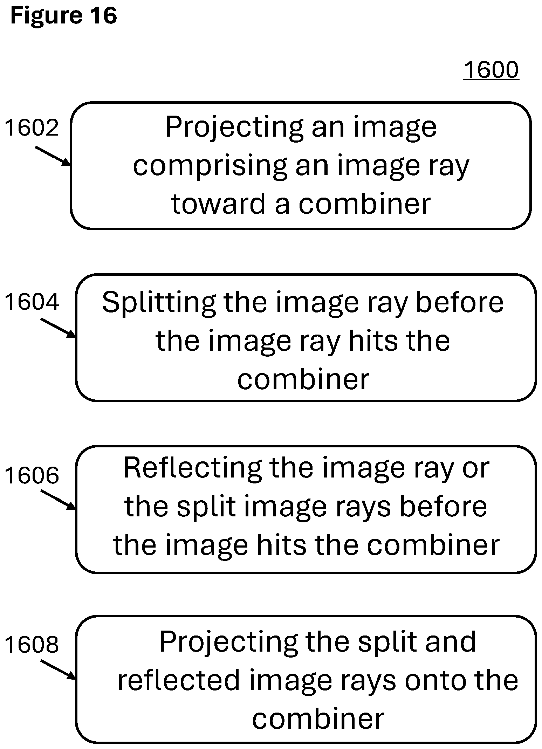

Figure 16 depicts a flow chart of a method 1600 of adjusting a projected image with the heads-up display unit 202 and/or the heads-up display system 200 as described above with reference to Figure 2. At step 1602, the method includes projecting, by the projector 204, an image comprising an image ray 214 toward a combiner 210. At step 1604, the method includes splitting, by the splitting element 206, the image ray 214 before the image ray hits the combiner 210. At step 1606, the method includes reflecting, by the freeform mirror 208, the image ray 214 or the split image rays 216a, 216b before the image hits the combiner 210. At step 1608, the method includes projecting the split and reflected image rays onto the combiner 210. Advantageously, image ghosting and image rotation can be reduced as described above.

In an embodiment the method 1600 may further include splitting the projected image ray into at least two image rays 216a, 216b as described above with reference to Figure 2. In particular, a first ray 216a of the at least two image rays may be transmitted through the splitting element 206. A second ray 216b of the at least two image rays may be reflected by the splitting element 206 such that the second ray 216b is projected separate from and parallel to the first ray 216a. The distance between the first ray 216a and the second ray 216b may be set to a predetermined threshold based on the physical properties of the combiner 210. The combiner 210 may be operable to reflect the first ray 216a at a first angle and to reflect the second ray 216b at a second angle such that the first ray 216a and the second ray 216b are combined at predetermined distance from the combiner 210. Advantageously, a user may experience less or no image ghosting, as described above.

In an embodiment the freeform mirror 208 may be rotated in at least one of the x-axis, the y-axis, and the z-axis. Advantageously, a vehicle manufacturer and/or end-user may adjust (either manually or using a user interface that is coupled to a motor) the freeform mirror such that image rotation can be corrected for a plurality of different types of windshield and/or other types of combiner. Furthermore, image rotation can be corrected for a plurality of different location placements of the heads-up display unit.

## Claims

1. A heads-up display unit (202) comprising:
A housing;
A projector (204) within the housing;
A splitting element (206) within the housing; and
A freeform mirror (208) within the housing.

2. The heads-up display unit of claim 1, wherein the projector is operable to project an image onto a combiner, the image comprising an image ray.

3. The heads up display unit of claim 2, wherein the combiner is:
a windshield of a vehicle;
a beam splitter
a diffraction grating;
a thin film volume hologram; or
a glass splitting wedge.

4. The heads-up display unit of any one of claims 1 to 3, wherein the projector comprises:
a light emitting diode, LED, projector;
a liquid crystal display, LCD, projector;
a laser projector; or
any combination of the above.

5. The heads-up display device of any one of claims 2 to 4, wherein the splitting element and the freeform mirror are placed in front of the projector and wherein the image ray projected by the projector passes through the splitting element and the freeform mirror before the image ray is projected onto the combiner.

6. The heads-up display of any one of claims 2 to 5, wherein the splitting element comprises a beam splitter operable to split the projected image ray into at least two image rays,
wherein:
a first ray of the at least two image rays is transmitted through the beam splitter;
a second ray of the at least two image rays is reflected by the beam splitter such that the second ray is projected separate from and parallel to the first ray; and
the distance between the first ray and the second ray is set to a predetermined threshold based on the physical properties of the combiner; and
the combiner is operable to reflect the first ray at a first angle and to reflect the second ray at a second angle such that the first ray and the second ray are combined at predetermined distance from the combiner.

7. The heads-up display unit of any one of claims 1 to 6, wherein the splitting element is not adjustable.

8. The heads-up display unit of any one of claims 6 to 7, wherein:
the splitting element is:
orthogonal to the projected image ray; or
at an angle less than 180° to the projected image ray; and
the freeform mirror is:
orthogonal to the at least two image rays; or
at an angle less than 180° to the at least two image rays.

9. The heads-up display unit of any one of claims 1 to 8, wherein the freeform mirror comprises:
a flat reflective surface;
a concave reflective surface;
a convex reflective surface; or
a combination of the above.

10. The heads-up display unit of any one of claims 1 to 9, wherein the freeform mirror is operable to be rotated around the x-axis, the y-axis, the z-axis, or any combination of the x-, y-, and z-axes.

11. A system comprising:
a combiner; and
the heads-up display of any one of claims 1 to 10.

12. The system of claim 11, wherein the combiner comprises:
a windshield of a vehicle;
a screen of a helmet;
a standalone reflective surface; or
any combination of the above.

13. A method (1600) of adjusting a projected image with the heads-up display unit as set out in any one of claims 1 to 10, the method comprising:
projecting (1602), by the projector, an image comprising an image ray toward a combiner;
splitting (1604), by the splitting element, the image ray before the image ray hits the combiner;
reflecting (1606), by the freeform mirror, the image ray or the split image rays before the image hits the combiner; and
projecting (1608) the split and reflected image rays onto the combiner.

14. The method of claim 13, further comprising:
splitting the projected image ray into at least two image rays, wherein:
a first ray of the at least two image rays is transmitted through the splitting element;
a second ray of the at least two image rays is reflected by the splitting element such that the second ray is projected separate from and parallel to the first ray;
the distance between the first ray and the second ray is set to a predetermined threshold based on the physical properties of the combiner; and
the combiner is operable to reflect the first ray at a first angle and to reflect the second ray at a second angle such that the first ray and the second ray are combined at predetermined distance from the combiner.

15. The method of any one of claims 13 or 14, further comprising:
rotating the freeform mirror in at least one of the x-axis, the y-axis, and the z-axis.
